# EUROPÄISCHE PATENTANMELDUNG

(11) **EP 2 256 373 A1**
(43) Veröffentlichungstag der Anmeldung: **01.12.2010**
(21) Anmeldenummer: 10159893.6
(22) Anmeldetag: 14.04.2010
(51) Int. Cl.: F16H 57/04, F16C 33/66

(54) **Vorrichtung zur Schmierstoffversorgung eines Lagers in einem Getriebe**

(30) Priorität: 29.05.2009 DE 102009023184
(71) Anmelder: Siemens Aktiengesellschaft, 80333 München (DE)
(72) Erfinder: Ambrosi, Marco, Dr., 09322 Penig (DE)

(57) **Zusammenfassung**

Die Erfindung betrifft eine Vorrichtung zur Schmierstoffversorgung eines Lagers (3) in einem Getriebe mit zumindest einem Schmierstoffauffangbehälter (1) aus Kunststoff. Der Schmierstoffauffangbehälter umfaßt einen zu einer Oberseite geöffneten Teil (11) zum Auffangen von einfallendem oder eingespritztem Schmierstoff und einen stutzenartigen Teil (12) zur Schmierstoffweiterleitung zum Lager. Mit dem stutzenartigen Teil ist der Schmierstoffauffangbehälter in eine Öffnung eines Getriebegehäuseteils (2) steckbar und dort mit dem Getriebegehäuseteil verklebt.

## Beschreibung

In DE 28 57 678 A1 ist eine Vorrichtung zur Schmierstoffversorgung in einem Getriebe beschrieben, durch die einem Lager an einer Abtriebswelle des Getriebes ausreichend Schmierstoff zugeführt wird. Dabei wird Spitzöl in einem oberhalb des Lagers angeordneten Kanal aufgefangen und über ein Ölablenkelement sowie eine Lagerkappe zu einem Ölsammelbereich weitergeleitet. Aus dem Ölsammelbereich wird das Öl mittels eines Zentrifugal-Ölrings zum Lager gefördert.

Aus DE 41 31 164 A1 ist eine Anordnung bekannt, bei der eine Antriebswelle eines Getriebes mit einem Kegelrollenlager in einem Getriebegehäuse gelagert ist. In der Antriebswelle ist zentrisch eine Abtriebswelle mit einem Kegelrollenlager gelagert. Zur Schmierung der Kegelrollenlager wird Spritzöl in einem Sammelbehälter aufgefangen und über einen Ölkanal zu einer Verzweigungsstelle geleitet. Von der Verzweigungsstelle wird das Öl über getrennte Ölkanäle zu den Kegelrollenlagern verteilt.

In WO 2006/110641 ist ein Schmierungssystem für eine Maschine mit mehreren rotierenden Maschinenelementen beschrieben, das einen Sumpf zum Sammeln und Bereitstellen von Schmierstoff für die rotierenden Maschinenelemente umfaßt. Bei einem Anlauf der Maschine werden die rotierenden Maschinenelemente durch Schmierstoff im Sumpf tauchgeschmiert. Durch Zentrifugalwirkung wird Schmierstoff von den rotierenden Maschinenelementen aus dem Sumpf zu einem oberhalb des Sumpfs angeordneten Speicherbehälter transportiert. Hierdurch sinkt der Schmierstoff so weit ab, daß die rotierenden Maschinenelemente nach dem Anlauf der Maschine nicht mehr durch den Schmierstoff im Sumpf tauschgeschmiert werden, sondern über Ölzuführungskanäle mit dem Schmierstoff aus dem Speicherbehälter geschmiert werden.

Bei konventionellen Schmierstoffversorgungssystemen sind Schmierstoffauffang- und -verteilungseinrichtungen als Leitbleche oder integrierte Gußteile an Gehäuse- oder Rahmenteilen ausgeführt. Insbesondere an schwer zugänglichen Stellen ist eine Anordnung von Leitblechen oder integrierten Gußteilen äußerst aufwendig. Bei Schmierstoffauffang- oder -verteilungselementen, die in einer Integralbauweise als Gußteile an Gehäuse- oder Rahmenteile einstückig angeformt sind, entstehen außerdem erhöhte Aufwände für eine Erstellung von Guß-Modellen und für eine Aufbereitung von Gußteilen nach einem Gußvorgang, beispielsweise durch Reinigungsstrahlen oder Putzen der Gußteile. Derartige Fertigungsschritte sind schwer zu automatisieren und entsprechend kostenintensiv.

Der vorliegenden Erfindung liegt die Aufgabe zugrunde, eine preiswert herzustellende und einfach zu montierende Vorrichtung zur Schmierstoffversorgung eines Lagers in einem Getriebe anzugeben.

Diese Aufgabe wird erfindungsgemäß durch eine Vorrichtung mit den in Anspruch 1 angegebenen Ansprüchen gelöst. Vorteilhafte Weiterbildungen der vorliegenden Erfindung sind in den abhängigen Ansprüchen angegeben.

Die erfindungsgemäße Vorrichtung zur Schmierstoffversorgung eines Lagers in einem Getriebe weist zumindest einen Schmierstoffauffangbehälter aus Kunststoff auf. Der Schmierstoffauffangbehälter umfaßt einen zu einer Oberseite geöffneten Teil zum Auffangen von einfallendem oder eingespritztem Schmierstoff und einen stutzenartigen Teil zur Schmierstoffweiterleitung zum Lager. Der Schmierstoffauffangbehälter ist mit dem stutzenartigen Teil in eine Öffnung eines Getriebegehäuseteils steckbar und dort mit dem Getriebegehäuseteil verklebt. Ein Getriebegehäuseteil kann beispielsweise eine Innenwand in einem Getriebe oder allgemein ein Maschinenteil sein, das zumindest einen Lagersitz aufweist.

Eine Ausführung des Getriebegehäuseteils und des Schmierstoffauffangbehälters in einer Differentialbauweise, in der das Getriebegehäuseteil und der Schmierstoffauffangbehälter nicht einstückig aneinander geformt sind, ermöglicht eine Trennung von schmierstoffsammelnder und schmierstoffverteilender Funktion der erfindungsgemäßen Vorrichtung. Hierdurch können wiederum gehäuseseitige konstruktive Maßnahmen zur Schmierstoffversorgung vereinfacht werden.

Schmierstoffauffangbehälter aus Kunststoff sind darüber hinaus im Vergleich zu Schmierstoffversorgungssystemen in Guß-Integralbauweise fertigungstechnisch einfacher und kostengünstiger zu realisieren, da eine aufwendige Nachbearbeitung wie bei Gußteilen nach dem Gußvorgang nicht erforderlich ist. Durch eine Verwendung von Schmierstoffauffangbehältern aus Kunststoff ergibt sich außerdem eine Gewichtseinsparung.

Die Trennung von schmierstoffsammelnder und schmierstoffverteilender Funktion der erfindungsgemäßen Vorrichtung ermöglicht des weiteren eine Verwendung von symmetrischen Hälften bei geteilten Getriebegehäusen. Außerdem wird eine Vereinheitlichung und Wiederverwendung von Komponenten eines Schmierstoffversorgungssystems für unterschiedliche Getriebetypen vereinfacht. Hieraus entstehende Rationalisierungseffekte ermöglichen eine weitere Reduktion von Fertigungskosten.

Die vorliegende Erfindung wird nachfolgend an einem Ausführungsbeispiel anhand der Zeichnung näher erläutert. Es zeigt
- Figur 1: eine Vorrichtung zur Schmierstoffversorgung eines Lagers in einem Getriebe,
- Figur 2: die Vorrichtung gemäß Figur 1 in einer ersten Schnittdarstellung,
- Figur 3: die Vorrichtung gemäß Figur 1 in einer zweiten Schnittdarstellung,
- Figur 4: die Vorrichtung gemäß Figur 1 in einer ersten per- spektivischen Darstellung,
- Figur 5: die Vorrichtung gemäß Figur 1 in einer zweiten per- spektivischen Darstellung,
- Figur 6: ein Schmierstoffauffangbehälter der Vorrichtung ge- mäß Figur 1 in perspektivischer Darstellung.

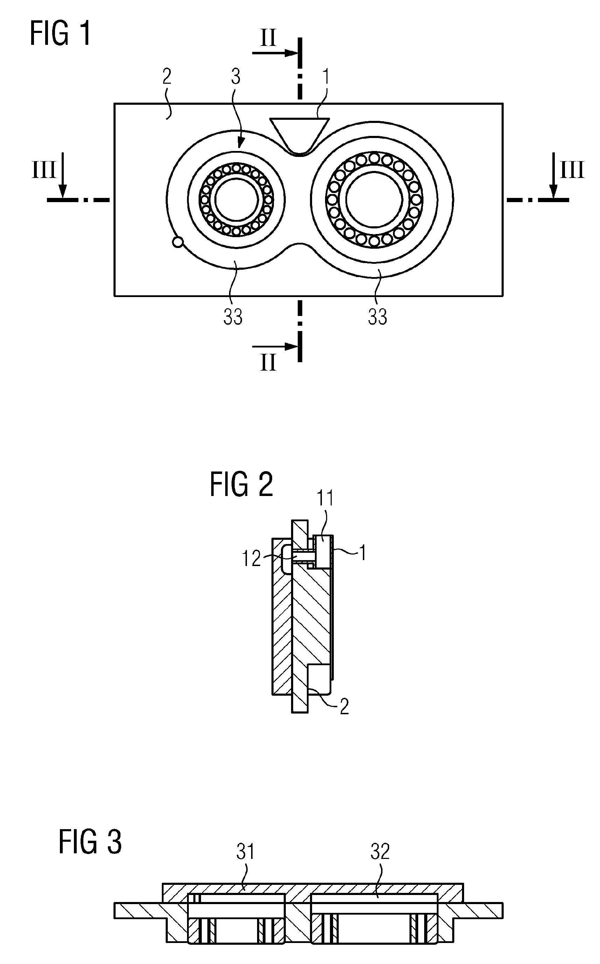

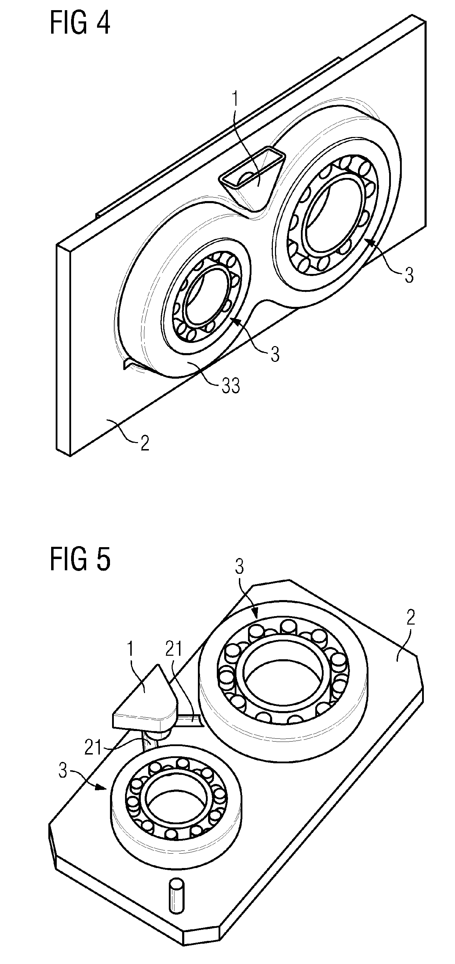

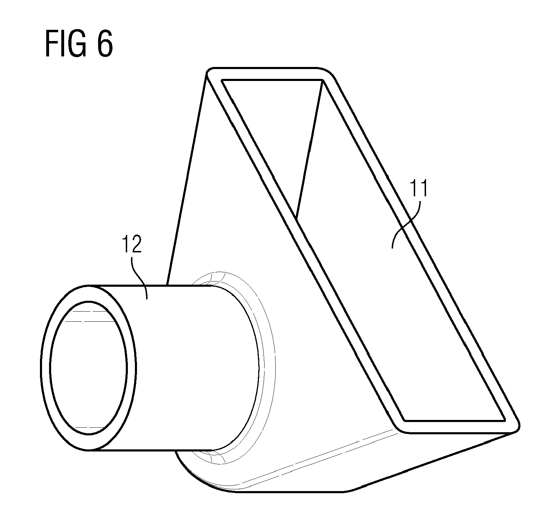

Die in Figur 1 dargestellte Vorrichtung weist einen Ölauffangbehälter 1 aus Kunststoff auf. Anhand der Schnittdarstellung entlang einer Linie II-II, die in Figur 2 wiedergegeben ist, und der perspektivischen Darstellung in Figur 6 ist erkennbar, daß der Ölauffangbehälter 1 einen zu einer Oberseite geöffneten Teil 11 zum Auffangen von einfallendem bzw. eingespritztem Öl und einen stutzenartigen Teil 12 zur Ölweiterleitung zu in einer Gehäusewand 2 angeordneten Lagern 3 umfaßt. Die Gehäusewand 2 weist außerdem angeformte Lagersitznaben 33 auf, welche hinsichtlich ihrer Dimensionierung an die Lager 3 angepaßt sind. Der Ölauffangbehälter 1 ist mit dem stutzenartigen Teil 12 in eine Öffnung der Gehäusewand 2 gesteckt und dort mit der Gehäusewand 2 verklebt (siehe auch Figur 4), beispielsweise mittels eines Harzes. Die Gehäusewand 2 und der Ölauffangbehälter 1 weisen damit eine Differentialbauweise auf, bei der schmierstoffsammelnde und schmierstoffverteilende Funktionen getrennt sind.

Der Ölauffangbehälter 1 ist in einem Bereich zwischen zwei Lagersitzen in der Gehäusewand angeordnet, so daß beide Lager 3 über den Ölauffangbehälter 1 mit Schmierstoff versorgt werden. Entsprechend der in Figur 3 abgebildeten Schnittdarstellung entlang einer Line III-III in Figur 1 erstreckt sich der stutzenartige Teil 12 zwischen dem zur Oberseite geöffneten Teil 11 und jeweils einem speziell gestalteten Lagerdeckel 31, der zur Ölversorgung des jeweiligen Lagers 3 an vorgegebenen Schmierstellen ausgebildet ist. Auf diese Weise wird der Schmierstoff zu einem Schmierstoffreservoir 32 zwischen Lagerdeckel 31 und Lager 3 bzw. Schmierstellen geleitet. Alternativ oder zusätzlich kann der stutzenartige Teil 12 in Schmierstoffzuführungskanäle 21 münden, die in die Gehäusewand 2 eingebettet sind und an vorgegebenen Schmierstellen in Lagersitzbohrungen für die Lager 3 enden (siehe Figur 5).

Die Anwendung der vorliegenden Erfindung ist nicht auf das hier beschriebene Ausführungsbeispiel beschränkt.

## Patentansprüche

1. Vorrichtung zur Schmierstoffversorgung eines Lagers in einem Getriebe mit
- zumindest einem Schmierstoffauffangbehälter aus Kunststoff, der einen zu einer Oberseite geöffneten Teil zum Auffangen von einfallendem oder eingespritztem Schmierstoff und einen stutzenartigen Teil zur Schmierstoffweiterleitung zum Lager umfaßt,
- wobei der Schmierstoffauffangbehälter mit dem stutzenartigen Teil in eine Öffnung eines Getriebegehäuseteils steckbar und dort mit dem Getriebegehäuseteil verklebt ist.

2. Vorrichtung nach Anspruch 1,
bei der das Getriebegehäuseteil und der Schmierstoffauffangbehälter in einer Differentialbauweise ausgeführt sind.

3. Vorrichtung nach einem der Ansprüche 1 oder 2,
bei der der Schmierstoffauffangbehälter in einem Bereich zwischen zwei Lagersitzen im Getriebegehäuseteil angeordnet ist.

4. Vorrichtung nach einem der Ansprüche 1 bis 3,
bei der sich der stutzenartige Teil zwischen dem zur Oberseite geöffneten Teil und einem Lagerdeckel erstreckt, der zur Schmierstoffversorgung des Lagers an vorgegebenen Schmierstellen ausgebildet ist.

5. Vorrichtung nach einem der Ansprüche 1 bis 4,
bei der sich der stutzenartige Teil zwischen dem zur Oberseite geöffneten Teil und zumindest einem Schmierstoffzuführungskanal erstreckt, der an einer vorgegebenen Schmierstelle in einer Lagersitzbohrung endet.

6. Vorrichtung nach einem der Ansprüche 1 bis 5,
bei der der Schmierstoffauffangbehälter und das Getriebegehäuseteil mit einem Harz verklebt sind.
